# DEMANDE DE BREVET EUROPEEN

(11) **EP 0 642 209 A1**
(43) Date de publication de la demande: **08.03.1995**
(21) Numéro de dépôt: 94401728.4
(22) Date de dépôt: 27.07.1994
(51) Int. Cl.: H02K 19/30, H02K 19/26, H02K 16/02, H02K 21/04, H02K 21/14, H02P 6/20

(54) **Dispositif de démarrage de turbine, notamment de turbine à gaz**

(30) Priorité: 04.08.1993 FR 9309614
(71) Demandeur: LABINAL, F-78370 Montigny le Bretonneux (FR)
(72) Inventeur: Felix, Gérard, F-49610 Murs Erigne (FR)
(74) Mandataire: Bernasconi, Jean

(57) **Abrégé**

Le dispositif est réalisé par l'application d'un alternateur ayant un premier rotor à aimants permanents et un second rotor homopolaire, les deux rotors étant disposés dans un stator commun comportant un bobinage de puissance entourant les deux rotors et une bobine d'excitation disposée au regard du rotor homopolaire, application dans laquelle ledit alternateur (5) est relié en rotation à ladite turbine (1), le bobinage de puissance étant susceptible d'être connecté soit à la charge (7) lorsque la turbine a atteint une vitesse d'autonomie, soit à une alimentation (9) par l'intermédiaire d'un circuit d'asservissement (10) pour procéder au démarrage de la turbine depuis sa vitesse nulle jusqu'à une vitesse d'autonomie.

## Description

La présente invention a trait au démarrage des turbines, et notamment des turbines à gaz.

Le démarrage des turbines à gaz est classiquement effectué au moyen d'un démarreur auxiliaire à courant continu qui l'amène de la vitesse nulle à la vitesse d'autonomie.

La turbine à gaz se distingue par un couple résistant non nul à l'arrêt qui croît rapidement en début de rotation, diminue vers 15 à 20 % de la vitesse nominale (Ng) et s'annule vers 30 à 40 % de Ng. Ce couple est sensible à la température, en particulier à l'arrêt. Ainsi, une turbine à gaz mise en vitesse par un démarreur auxiliaire traditionnel à courant continu atteint sa vitesse d'autonomie au bout d'un temps qui peut être 3 fois plus long à -55°C en altitude et en vol qu'à +25°C au sol. Cette vitesse d'autonomie, située vers la moitié de la vitesse normale de marche de la turbine, est celle à partir de laquelle la turbine n'est plus assistée par le démarreur et est totalement motrice.

Cette très grande différence de temps provient de la nature même du démarreur auxiliaire à courant continu. En effet, celui-ci possède une seule caractéristique naturelle n = f(c) (vitesse en fonction du couple résistant). On devine que le moteur a une vitesse d'autant plus faible que le couple résistant est élevé et, de ce fait, que le temps de mise en vitesse de la turbine augmente avec le couple résistant qu'elle impose au moteur. De plus, ce type de démarreur présente une courbe I = f(c) (intensité absorbée en fonction du couple résistant) qui prend des valeurs très élevées en début de rotation. Cela se traduit par l'effondrement de la tension de la batterie qui l'alimente, ce qui a pour conséquence de réduire encore la vitesse de rotation.

Chaque démarrage provoque des surintensités dommageables pour la batterie d'alimentation et pour le démarreur lui-même. L'entraînement de la turbine nécessite une cinématique spéciale avec un rapport d'entraînement propre au démarreur. De plus, le démarreur doit être relié à la turbine par un accouplement à roue libre afin d'être désaccouplé aux grandes vitesses de rotation, ce qui entraîne une complication mécanique et cinématique. La maintenance est délicate, en particulier à cause de l'usure des balais du démarreur et des poussières. Le frottement des balais sur le collecteur consomme une puissance non négligeable. Le démarreur possède un poids propre, qui n'est pas négligeable dans le cas de turbines montées sur aéronefs. Enfin il est difficile de changer les caractéristiques naturelles (vitesse en fonction du couple et du temps) du démarreur, sans modifications importantes et longues.

L'invention se propose de remédier à ces inconvénients.

On connaît, par le brevet FR-A-2 572 229 et par le brevet US 4 782 257 qui est ici incorporé à la présente demande, un alternateur susceptible d'être associé à une turbine à gaz et comprenant un ensemble de rotors comportant un arbre commun sur lequel sont montés fixes un premier rotor, à aimants permanents, et un second rotor homopolaire, cet ensemble étant disposé dans un stator commun comportant un bobinage de puissance entourant les deux rotors, et au moins une bobine d'excitation disposée au regard du rotor homopolaire et alimentée en fonction de la vitesse de rotation de l'ensemble de rotors et/ou de la charge de la machine.

On comprend que, grâce à cet agencement, on engendre un flux magnétique dont le sens peut être inversé en inversant le sens du courant dans la bobine d'excitation, ce qui permet, par le jeu de ce sens de circulation et de la valeur de ce courant, de faire varier le flux homopolaire, ce flux s'ajoutant à celui engendré par les aimants ou s'en retranchant pour régulariser la machine.

Cette machine peut également être réalisée sous forme de machine motrice, et notamment de moteur synchrone.

L'invention consiste dans l'application d'un tel alternateur au démarrage d'une turbine, et notamment d'une turbine à gaz, application dans laquelle ledit alternateur est relié en rotation à ladite turbine, le bobinage de puissance étant susceptible d'être connecté, d'une part à la charge, lorsque la turbine a atteint une vitesse d'autonomie, d'autre part à une alimentation telle qu'une batterie lors du démarrage de la turbine depuis sa vitesse nulle jusqu'à une vitesse d'autonomie.

De façon particulièrement avantageuse, la connexion à l'alimentation peut être réalisée à l'aide d'un dispositif électronique d'asservissement, recevant par exemple des informations de vitesse et/ou de position du rotor de l'alternateur (ou la turbine) par des capteurs convenables.

Dans un perfectionnement, le bobinage d'excitation peut également être utilisé pour une régulation du déroulement de la mise en vitesse de la turbine, mais en général ce bobinage peut rester inutilisé.

La maintenance est réduite à celle des roulements. Les surintensités sont inexistantes, le dispositif d'asservissement contrôlant à chaque instant l'intensité nécessaire et suffisante pour le déroulement prévu de la mise en vitesse. La liaison machine-turbine est unique et permanente, de par sa conception originelle. En l'absence de pièces en frottement, cette machine admet les grandes vitesses de la turbine. Enfin les courbes de vitesse en fonction du couple et du temps, donc les accélérations, peuvent être librement choisies et modifiées par réglage du dispositif d'asservissement, ce qui est très précieux dans les périodes de mise au point et dans les cas d'environnement climatique très variable.

L'invention est particulièrement adaptée au cas des turbines à gaz du type auxiliaire pour aéronefs permettant le démarrage des moteurs principaux et/ou entraînant un générateur auxiliaire ou de secours, et aussi du type des turbines à gaz pour propulsion d'engins divers. Les vitesses de ces différentes turbines varient de 20 000 à 60 000 tr/mn et plus.

D'autres caractéristiques et avantages de l'invention apparaîtront au cours de la description qui va suivre, faite en se référant aux dessins annexés donnés uniquement à titre d'exemple et dans lesquels :
La figure 1 est une vue schématique d'une application selon l'invention ;
La figure 2 est une vue en coupe longitudinale d'un alternateur-démarreur utilisé dans l'invention ;
La figure 3 est une vue en perspective de l'ensemble de rotors de l'alternateur représenté à la figure 2 ;
La figure 4 en est une vue en coupe transversale suivant la ligne III-III de la figure 2 ;
La figure 5 en est une vue en coupe transversale suivant la ligne IV-IV de la figure 2 ;
La figure 6 montre les courbes caractéristiques du démarreur de l'invention.

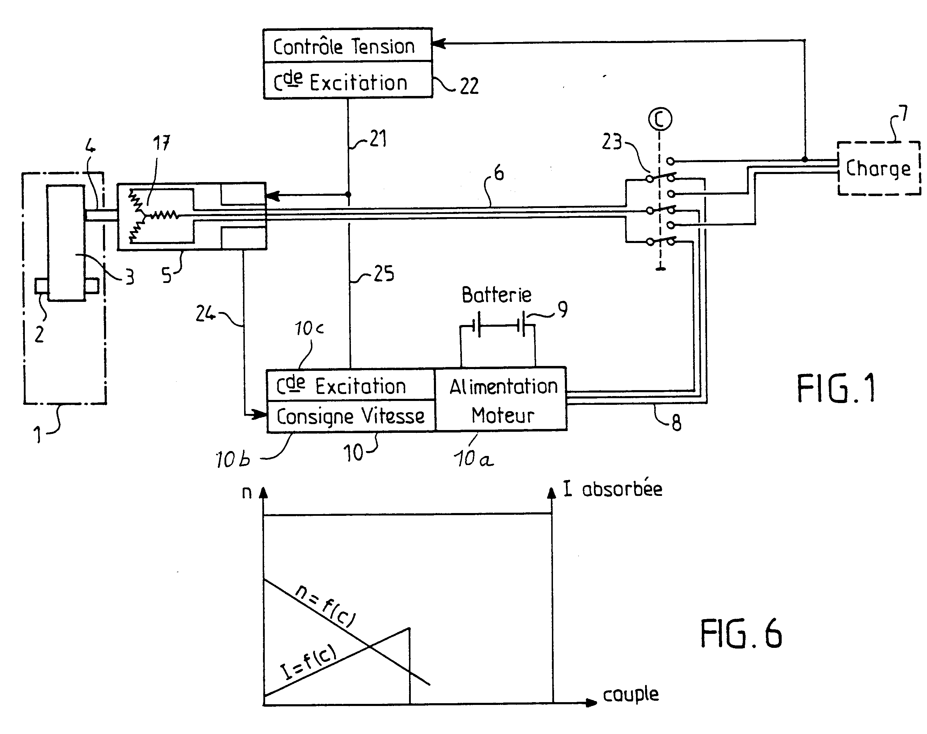

En se référant à la figure 1, on voit qu'on a représenté schématiquement une turbine à gaz 1 dont l'arbre 2 est relié en rotation, par une chaîne cinématique de transmission usuelle 3, à l'arbre rotor 4 d'un alternateur 5, la transmission 3 assurant, par exemple, un rapport vitesse turbine / vitesse alternateur de 2,5/1. Le bobinage statorique de puissance de l'alternateur 5 est relié, par des conducteurs 6, à un contacteur 23 susceptible d'être connecté à la charge 7, par exemple des circuits électriques d'un aéronef. Par basculement du contacteur 23, le même bobinage statorique peut être alimenté, à travers des conducteurs 8, par une batterie 9, sous le contrôle d'un circuit électronique d'asservissement 10.

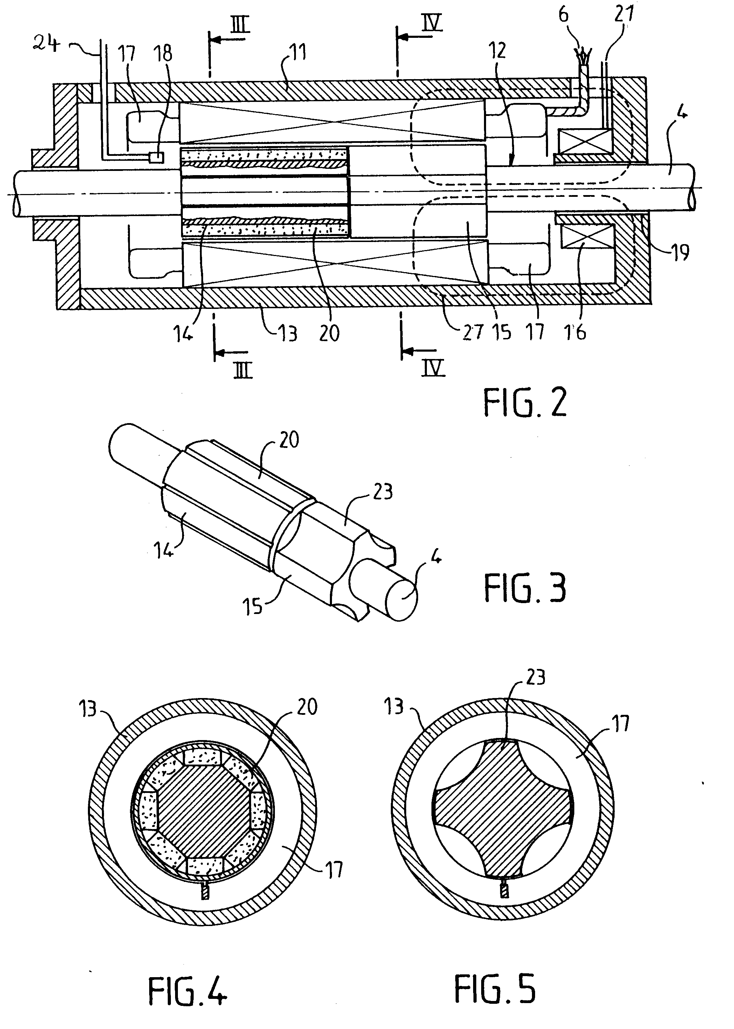

En se référant plus particulièrement à la figure 2, l'alternateur utilisé comprend, comme décrit dans le brevet FR-A-2 572 229, un stator 11 dans lequel est monté rotatif un ensemble de rotors désigné généralement par la référence 12.

L'ensemble de rotors 12 comprend l'arbre rotatif 4 portant un premier rotor 14 du type classique à aimants permanents 20, au bout duquel est également monté un second rotor 15 du type homopolaire, à dents.

L'ensemble de rotors 12 est monté rotatif par les extrémités de l'arbre 4 dans des paliers à roulement 19 à l'intérieur du carter 13 qui comporte les bobinages de puissance 17 fixés sur la paroi interne du carter 13 et s'étendant sur toute la longueur du premier et du second rotors.

Une bobine d'excitation 16 est montée sur une pièce de support solidaire du stator 11 et peut être alimentée en courant de préférence continu mais pouvant aussi être modulé à travers des conducteurs 21, par le biais d'un circuit électronique de contrôle 22 permettant, par exemple, de maintenir constante la tension de sortie générée par l'alternateur sur les conducteurs 6 (voir figure 1).

On comprend que, lorsque le bobinage d'excitation 16 est alimenté en courant continu, il engendre un flux magnétique 27 tel que représenté à la figure 2, qui traverse les dents du rotor homopolaire 15 et, si on considère une section du stator qui couvre l'ensemble du rotor, celle-ci est traversée par la somme du flux des aimants et du flux dans les dents du rotor homopolaire.

Par le jeu du sens de circulation du courant dans la bobine d'excitation 16, le flux 27 homopolaire peut être soit additif, soit soustractif, par rapport au flux engendré par les aimants du rotor 14. On peut ainsi maintenir constante la tension de sortie de l'alternateur au moyen du dispositif électronique 22 d'un type connu commandant l'alimentation du bobinage d'excitation 16 de façon appropriée en fonction de la vitesse d'entraînement en rotation du rotor et de la charge du générateur.

La vitesse du rotor est détectée à cet effet à partir de capteurs à effet de Hall 18 de position du rotor coopérant avec les aimants du rotor et d'un circuit électronique classique fournissant un signal indicatif de la vitesse.

En se référant à la figure 1, on voit que le dispositif d'asservissement 10 comporte un circuit classique d'alimentation variable à partir de la batterie, commandé par un circuit de consigne de vitesse sensible aux capteurs de vitesse de rotation 18, par la ligne 24.

Le circuit d'alimentation 10a comporte, par exemple, un transformateur élévateur situé entre la batterie 9 et un redresseur, suivi d'un filtre, puis d'un onduleur. Dans le cas où le générateur doit délivrer une tension continue le transformateur et le redresseur ne sont pas nécessaires et seul le filtrage peut être maintenu pour limiter les variations d'intensité dans la batterie, l'ensemble formant un onduleur asservi pour la fonction moteur et un redresseur pour la fonction générateur.

Le circuit de consigne de vitesse 10b peut être programmé de façon à présenter des caractéristiques I = f(c) et n = f (c) optimales. La courbe optimale de montée en vitesse en fonction du temps est établie et mise en mémoire. Pendant la montée en vitesse, le circuit de consigne compare la courbe de montée en vitesse détectée par les capteurs, à la courbe mémorisée et, en cas d'écart, pilote le circuit d'alimentation pour compenser l'écart. De tels circuits d'asservissement sont usuels dans la commande des moteurs synchrones et n'ont donc pas à être décrits de façon détaillée. Il comporte, par exemple, un microprocesseur et des mémoires avec les interfaces nécessaires.

Eventuellement, le dispositif d'asservissement peut comprendre un circuit d'excitation 10c relié, par la ligne 25, aux bobinages d'excitation 16 pour les alimenter, sous le contrôle du circuit de consigne de vitesse, dans un sens compensant l'écart détecté entre la courbe de montée en vitesse réelle et la courbe mémorisée. Dans ce cas, on préfère que l'asservissement résulte de la combinaison des contrôles d'alimentation et d'excitation.

Le fonctionnement est le suivant :

La turbine étant au repos, la charge 7 est déconnectée du bobinage statorique 17 et ce dernier est relié par le contacteur 23 à la batterie 9. Le dispositif d'asservissement 10 contrôle le courant délivré depuis la batterie 9 de sorte que l'alternateur 5, fonctionnant en démarreur, commence à tourner en entraînant la turbine.

L'information de la vitesse transmise par les capteurs 18 est constamment comparée à la courbe optimale de montée en vitesse en fonction du temps, établie et mise en mémoire dans le circuit électronique d'asservissement 10b. Par le contrôle de la tension et de la fréquence appliquées au stator et éventuellement par le contrôle du courant d'excitation, l'intensité absorbée par le moteur et le flux (les deux variables qui génèrent directement le couple) prennent les valeurs juste nécessaires et suffisantes pour que la vitesse soit à chaque instant conforme à la valeur prévue, et pour qu'il n'y ait pas de pointe d'intensité néfaste comme dans le cas du démarreur à courant continu. La vitesse d'autonomie atteinte, la turbine étant devenue motrice, le contacteur déconnecte la machine et son circuit d'asservissement et la relie au circuit de charge. La machine remplit alors sa fonction d'alternateur.

Ainsi, le démarreur ne présente pas une caractéristique n = f (c) unique. De plus, la caractéristique I = f (c) d'un tel démarreur peut être limitée aux valeurs juste nécessaires aux besoins. Ainsi la mise en vitesse d'une turbine à gaz peut s'effectuer dans un temps toujours identique et quelle que soit la température de cette turbine. La mise en vitesse peut obéir à une loi prédéterminée et éventuellement modifiable.

## Revendications

1. Application d'un alternateur comprenant un ensemble de rotors avec un premier rotor à aimants permanents et un second rotor homopolaire, disposés dans un stator commun comportant un bobinage de puissance entourant les deux rotors, et au moins une bobine d'excitation disposée au regard du rotor homopolaire, au démarrage d'une turbine, notamment d'une turbine à gaz, dans laquelle ledit alternateur (5) est relié en rotation à ladite turbine (1), le bobinage de puissance (17) étant susceptible d'être connecté, d'une part à la charge (7), lorsque la turbine a atteint une vitesse d'autonomie, d'autre part à une alimentation (9) lors du démarrage de la turbine depuis sa vitesse nulle jusqu'à une vitesse d'autonomie.

2. Application selon la revendication 1, caractérisée en ce que la connexion à l'alimentation est réalisée à l'aide d'un dispositif électronique d'asservissement (10) recevant des informations relatives à la vitesse et/ou à la position du rotor de l'alternateur ou de la turbine.

3. Application selon l'une des revendications 1 et 2, caractérisée en ce que le bobinage d'excitation (16) est utilisé pour la régulation du déroulement de la mise en vitesse de la turbine.

4. Application selon l'une des revendications 2 et 3, caractérisée en ce que le circuit d'asservissement comporte un circuit d'alimentation variable du bobinage statorique (17) piloté par un circuit de consigne de vitesse sensible à la vitesse de rotation détectée, en fonction d'une courbe de montée en vitesse optimale préalablement mémorisée.

5. Application selon les revendications 3 et 4, caractérisée en ce que ledit circuit d'asservissement comporte également un circuit de commande d'excitation.

6. Application selon l'une quelconque des revendications 1 à 5, caractérisée en ce que la connexion alternée à la charge (7) et au bobinage statorique (17) est assurée par un contacteur (23).
